# EUROPÄISCHE PATENTSCHRIFT

(11) **EP 1 955 426 B1**
(45) Veröffentlichungstag und Bekanntmachung des Hinweises auf die Patenterteilung: **02.10.2019**
(21) Anmeldenummer: 06819508.0
(22) Anmeldetag: 15.11.2006
(51) Int. Cl.: H02K 1/27

(54) **ELEKTROMASCHINE UND ROTOR FÜR EINE ELEKTROMASCHINE**
ELECTRICAL MACHINE AND ROTOR FOR AN ELECTRICAL MACHINE
MACHINE ELECTRIQUE ET ROTOR POUR UNE MACHINE ELECTRIQUE

(30) Priorität: 21.11.2005 DE 102005055342; 15.02.2006 DE 102006006882
(43) Veröffentlichungstag der Anmeldung: 13.08.2008
(73) Patentinhaber: ROBERT BOSCH GMBH, 70442 Stuttgart (DE)
(72) Erfinder: EVANS, Steven Andrew, 77813 Buehl (DE)
(86) Internationale Anmeldenummer: PCT/EP2006/068497
(87) Internationale Veröffentlichungsnummer: WO 2007/057412

(56) Entgegenhaltungen:
- EP-A1- 0 655 825
- WO-A-03/005531
- DE-A1- 10 056 036
- DE-A1- 19 915 664

## Beschreibung

### Stand der Technik

Aus der WO 03/005531 A1 ist eine Elektromaschine bekannt, in deren Rotor Permanentmagnete eingelassen sind. Derartige so genannten vergrabene Permanentmagnete im Rotor haben eine ganze Reihe von Vorteilen für den Betrieb von Elektromaschinen, die jedoch durch den Nachteil geschmälert werden, dass der magnetische Fluss in den Brücken der Rotorlamellenbleche zwischen den Permanentmagneten kurzgeschlossen ist und damit nicht genutzt werden kann. Dieser kurzgeschlossene magnetische Fluss kann den Luftspalt zwischen Rotor und Stator nicht überwinden und daher nicht in die Statorwindungen einkoppeln, um Drehmoment zu erzeugen. Dies resultiert in einer Reduktion des Luftspaltflusses pro Pol und folglich einer Reduktion des erreichbaren Moments der Elektromaschine.

Dokument DE 199 156 64 A1 als nächstliegender Stand der Technik offenbart einen Rotor für eine Elektromaschine, wobei der Rotor Permanentmagnete in v-förmiger Anordnung umfasst, wobei der Rotorkörper an seinem Außenumfang parallel zur Drehachse abwechselnd feldfokussierende und nahezu feldfreie Bereiche ausbildet, die durch eine erste und eine zweite Art von Lamellenblechen gebildet werden.

### Vorteile der Erfindung

Gegenstand der Erfindung ist ein Rotor für eine Elektromaschine nach Anspruch 1. Dadurch wird im feldfokussierenden Bereich des Rotors die Flussdichte deutlich erhöht und der durch Kurzschluss in den Brücken verlorene magnetische Fluss vermindert. Als generelle Regel bei der Auslegung solcher Elektromaschinen gilt, dass der magnetische Kreis so ausgelegt wird, dass, wo immer im offenen Kreis möglich, d.h. bei Abwesenheit des Reaktionsfelds der Phasenwicklungen des Stators, eine Flussdichte von etwa 1,6 Tesla erreicht werden soll, damit das Blechpaket, aus dem der Rotor aufgebaut ist, mit zusätzlichem Reaktionsfeld magnetisch voll ausgenutzt werden kann. Ein typischer Stahl, der üblicherweise für die Lamellen verwendet wird, hat eine Sättigungsflussdichte von z.B. 2,1 Tesla. Wird der Rotor konventionell aufgebaut, bildet sich in dem Rotorbereich, in dem sich gemäß der Erfindung die axial alternierend angeordneten feldfokussierenden und feldfreien Bereiche befinden, eine Flussdichte aus, die deutlich geringer ist als diejenige, die mit der alternierenden Anordnung im feldfokussierenden Bereich erreicht werden kann. Dies bedeutet, dass in der konventionellen Anordnung das Lamellenblech hinsichtlich seiner magnetischen Eigenschaften nicht voll ausgenutzt ist. Liegt dieses Gebiet am Rand des Rotors, trägt dieses magnetisch ungenutzte Material nicht nur unvorteilhaft zur Masse des Rotors bei, sondern stellt auch einen bedeutenden Anteil des Trägheitsmoments des Rotors dar, das proportional zur vierten Potenz des Rotorradius ist.

Die feldfokussierenden Bereiche und die feldfreien Bereiche sind radial zwischen den Permanentmagneten und dem statorseitigen Rotorumfang angeordnet. Als feldfokussierende Bereiche des Rotorkörpers werden Bereiche angesehen, welche gegenüber einem konventionellen Rotorkörper vergrabenen Permanentmagneten eine deutlich erhöhte Flussdichte, z.B. um 70 bis 100%, aufweisen. Die nahezu feldfreien Bereiche werden durch Luftspalte gebildet, bei denen z.B. Material aus den Lamellen entfernt ist und damit die Masse in einem Außenbereich des Rotorkörpers, der üblicherweise die Polschuhe bildet, reduziert wird. Die feldfokussierenden Bereiche hingegen sind durch magnetisch leitfähiges Lamellenblechmaterial, gebildet.

Der Rotorkörper ist aus Blechlamellen aufgebaut. Erfindungsgemäss ist der Rotorkörper durch wenigstens zwei Arten von vorzugsweise alternierenden Lamellenblechen gebildet, die in Richtung der Drehachse aufeinander gestapelt sind. Damit kann eine einfache Fertigung eines bevorzugten Rotors erfolgen, indem die an sich übliche Lamellenbauweise vorteilhaft ausgenutzt wird, um die vorzugsweise alternierende Anordnung der feldfokussierenden und feldfreien Bereiche auszubilden.

Erfindungsgemäss liegt die eine Art von Lamellenblechen (nachfolgend auch als zweite Lamellenblechart bezeichnet) mit ihren Abmessungen radial innerhalb der anderen Art von Lamellenblechen (nachfolgend auch als erste Lamellenblechart bezeichnet). Dies ergibt eine sehr einfache Umsetzung der feldfokussierenden und feldfreien Bereiche. Der feldfokussierende Bereich ist durch Lamellenblechmaterial gebildet. Der feldfreie Bereich ist durch einen in axialer Richtung folgenden Luftspalt zwischen zwei Lamellenblechen erster Art gebildet. Zweckmäßige Lamellendicken liegen im Bereich von maximal 1 mm, vorzugsweise von 0,35°mm bis 0,65 mm, z.B. um 0,5 mm. Dickere Lamellen sind generell bei derartigen Elektromaschinen mit im Rotor vergrabenen Permanentmagneten weniger geeignet. Der feldfreie Bereich weist vorzugsweise eine axiale Ausdehnung von maximal 1,3 mm, besonders bevorzugt von maximal 1 mm, auf. Eine größere axiale Ausdehnung ist aufgrund des zu großen Luftspalts nicht von Vorteil. Auch der feldfokussierende Bereich hat bevorzugt eine axiale Ausdehnung von maximal 1,3 mm, besonders bevorzugt von maximal 1 mm. Prinzipiell kann die axiale Ausdehnung des feldfokussierenden Bereiches beliebig gewählt werden. Eine größere axiale Ausdehnung ist jedoch für die vorliegende Erfindung nicht von Vorteil, da die Reduzierung der Rotormassse, und damit der Rotorträgheit, zu gering ausfällt. Durch die bevorzugte Ausgestaltung werden die magnetischen Eigenschaften des Lamellenblechs im feldfokussierenden Bereich deutlich besser ausgenutzt, während das Trägheitsmoment des Rotors durch das fehlende Lamellenmaterial, das als Luftspalt die feldfreien Bereiche bildet, vermindert wird.

Erfindungsgemäss grenzt das kleinere Lamellenblech, d.h. die zweite Lamellenblechart, mit seinem Außenumfang bei eingesetzten Permanentmagneten an die Permanentmagnete an. Auf diese Weise hat die zweite Lamellenblechart eine geringere radiale Ausdehnung als die erste Lamellenblechart. Die zweite Lamellenblechart hat dabei eine regelmäßige, vorzugsweise rotationssymmetrische, oder unregelmäßige Form. Mit dieser Geometrie lässt sich das Gewicht des Rotors vermindern und die magnetischen Eigenschaften des Rotors optimieren.

Der Rotorkörper kann auch aus mehr als zwei Arten von Lamellenblechen aufgebaut sein, indem die zweite Lamellenblechart, welche eine geringere radiale Ausdehnung als die erste Lamellenblechart gekennzeichnet ist, durch unterschiedliche Lamellenbleche gebildet wird. Die unterschiedlichen Lamellenbleche der zweiten Lamellenblechart können beispielsweise unterschiedliche radiale Ausdehnungen haben oder unterschiedliche radiale Ausdehnungen in unterschiedlichen Bereichen der Lamellenbleche.

Bevorzugt ist der Permanentmagnet aus Neodym-Eisen-Bor-haltigem Material (NdFeB) oder Samarium-Cobalt-haltigem Material (SmCo) gebildet.

Weitere Aspekte der Erfindung ergeben sich aus den abhängigen Ansprüchen, insbesondere wird eine Elektromaschine mit einem Rotor nach Anspruch 1 vorgeschlagen. Vorteilhafterweise ist die Elektromaschine als bürstenlose Synchronmaschine oder einer bürstenlosen Gleichstrommaschine ausgebildet.

### Zeichnungen

Weitere Ausführungsformen, Aspekte und Vorteile der Erfindung ergeben sich aus nachfolgend anhand von Zeichnungen dargestellten Ausführungsbeispielen der Erfindung. Im Folgenden zeigen:
- Fig. 1 a-c: a: eine Draufsicht auf eine bevorzugte elektrische Maschine, b: eine Lamelle erster Art, c: eine Lamelle zweiter Art;
- Fig. 2 a-b: a: Ausschnitt eines Längsschnitts durch eine bevorzugte elektrische Maschine, b: perspektivischer Ausschnitt aus einem bevorzugten Rotor;
- Fig. 3 a-b: a: Längsausschnitt durch eine elektrische Maschine einer ersten alternativen Ausgestaltung, b: perspektivischer Ausschnitt eines ersten alternativen Rotors;
- Fig. 4 a-b: a: Längsausschnitt durch eine elektrische Maschine einer zweiten alternativen Ausgestaltung, b: perspektivischer Ausschnitt eines zweiten alternativen Rotors;
- Fig. 5 a-b: a: Längsausschnitt durch eine elektrische Maschine einer dritten alternativen Ausgestaltung, b: perspektivischer Ausschnitt eines dritten alternativen Rotors;
- Fig. 6 a-b: a: Längsausschnitt durch eine elektrische Maschine einer vierten alternativen Ausgestaltung, b: perspektivischer Ausschnitt eines vierten alternativen Rotors;
- Fig. 7 a-d: a: eine Draufsicht auf eine Lamelle erster Art für eine Folgepol-Elektromaschine mit drei Phasen und vier Polen, b: eine erste Ausgestaltung einer Lamelle der zweiten Art, c: eine alternative Ausgestaltung einer Lamelle der zweiten Art und d: eine zweite alternative Ausgestaltung einer Lamelle der zweiten Art; und
- Fig. 8: das Verhalten von Rotormasse, Rotorträgheitsmoment und Luftspaltfluss in Abhängigkeit von der Polzahl aus einem dreidimensionalen Finite-Element-Modell.

### Beschreibung der Ausführungsbeispiele

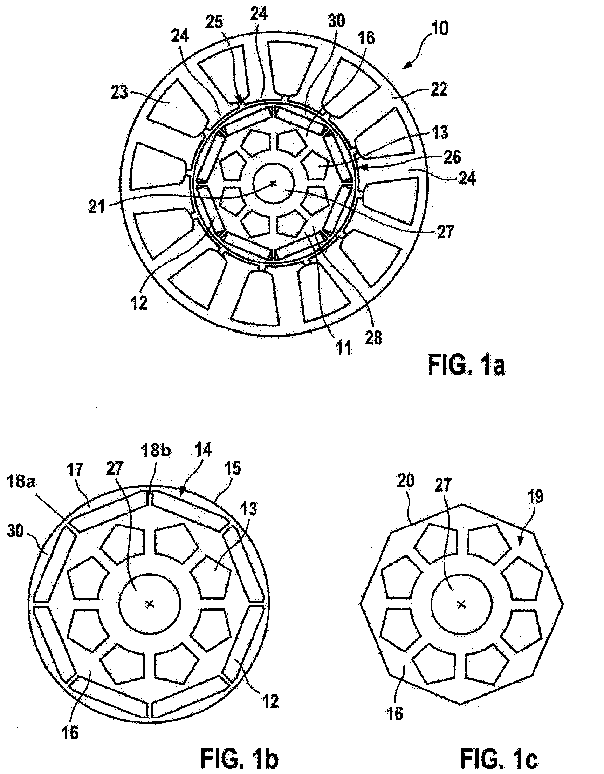

Fig. 1a-c zeigen beispielhaft die Erfindung anhand einer als bürstenlose Synchronmaschine ausgebildeten Elektromaschine 10 mit drei Phasen und acht Polen, zwölf Nuten 23 im Stator 22 zur Aufnahme von nicht dargestellten Spulenwicklungen, bei der in dem Rotor 28 innerhalb des Rotorkörpers 11 dem entsprechend acht Öffnungen 12 zur Aufnahme von sich in axialer Richtung parallel zur Drehachse 21 erstreckenden Permanentmagnete vorgesehen sind. Die Elektromaschine 10 ist als Innenläufer ausgebildet, bei der der Rotor 28 innerhalb des Stators 22 um die Drehachse 21 drehbar gelagert ist.

Fig. 1a zeigt eine Draufsicht auf die Elektromaschine 10. Die sich parallel zur Drehachse 21 erstreckenden Nuten 23 sind durch übliche Statorzähne 24 getrennt, deren Zahnköpfe in üblicher Weise voneinander in der Mitte der Nuten 23 jeweils durch einen kleinen Luftspalt 25 beabstandet sind. Zwischen Stator 22 und Rotor 28 ist radial ein Luftspalt 26 ausgebildet.

Der Rotor 28 weist, ausgehend von seiner inneren Öffnung 27 zur Aufnahme einer nicht dargestellten Welle, in einem Innenbereich 16 auf einem gemeinsamen Radius symmetrisch verteilt acht Materialausnehmungen 13 auf, die die Masse und das Trägheitsmoment des Rotors 28 erniedrigen. Radial beabstandet zum Außenrand 15 hin sind acht Magnetaufnahmen mit trapezförmigem Querschnitt angeordnet, die durch die Öffnungen 12 in den einzelnen Lamellen gebildet sind. Den Kern des Rotors 28 bildet der Innenbereich 16, radial außen einschließlich der Öffnungen 12 ist der Außenbereich 30 des Rotors 28 angeordnet.

Die Fig. 1b und 1c zeigen bevorzugte Lamellen 14, 19 zweier verschiedener Arten, die vorzugsweise alternierend aufeinander gestapelt (Lamelle 14 - Lamelle 19 - Lamelle 14 - Lamelle 19 - Lamelle 14 - Lamelle 19 - etc.) den Rotorkörper 11 des Rotors 28 bilden. In Fig. 1b ist in radialer Richtung zwischen den Öffnungen 12 und dem Außenrand 15 jeweils ein Polschuh 17 im Außenbereich 30. Zwischen den Öffnungen 12 sind Brücken 18a und Stege 18b angeordnet. In diesem Bereich wäre bei einer konventionellen Ausgestaltung der Elektromaschine 10 der unerwünschte Kurzschluss der Magnetfeldlinien zu beobachten, der jeweils die unmittelbaren Randbereiche zweier benachbarter Öffnungen 12, Brücken 18a und den dazwischen liegenden schmalen Stegen 18b einschließt. Typischerweise umschließt der Kurzschluss wenige Millimeter. Die am Außenumfang 15 bogenförmig ausgebildeten Polschuhe 17, die Brücken 18a und Stege 18b sind vorzugsweise möglichst schmal und entsprechen z.B. an der schmalsten Stelle etwa der Dicke der Lamelle 14, während deren Höhe in der Mitte der Polschuhe 17 deutlich größer ist. Die Höhe hängt geometriebedingt z.B. von der Zahl der Pole der Elektromaschine 10 ab.

Die Auswirkungen solcher Kurzschlüsse werden vorteilhaft verringert, wenn alternierend je eine Lamelle 14 der ersten Art nach Fig. 1b und eine Lamelle 19 der zweiten Art nach Fig. 1c aufeinander gestapelt werden, bis eine gewünschte axiale Länge des Rotorkörpers 11 erreicht ist. Die Lamellen 19 der zweiten Art liegen mit ihren Abmessungen radial innerhalb der ersten Art von Lamellenblechen 14, wobei die Lamellen 19 mit ihrem Außenrand 20 bis an die radial innere Kante der Öffnungen 12 ragt. Die Lamellen 19 sind mit ihrem Innenbereich 16 gleich wie die Lamellen 14 ausgebildet, es fehlt jedoch der Außenbereich 30.

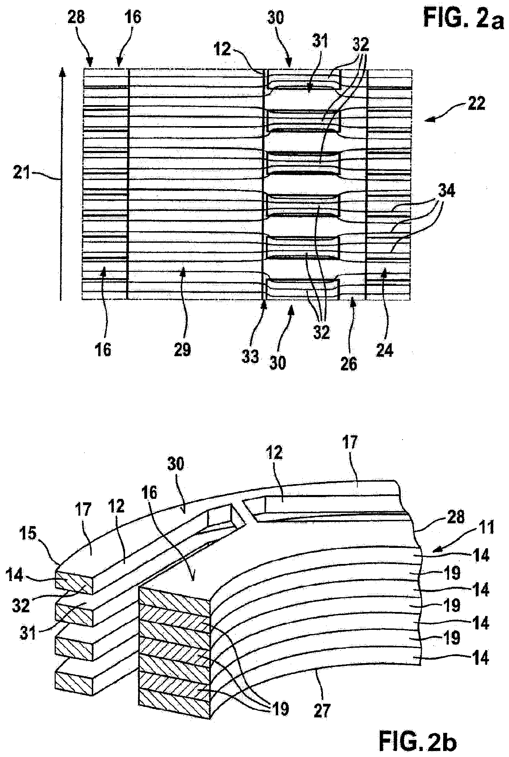

Fig. 2a zeigt einen Ausschnitt aus der Elektromaschine 10 der Fig. 1 als Längsschnitt durch den Rotor 28 und den Stator 22, bei der die Wirkung der vorgeschlagenen bevorzugten alternierenden Anordnung der Lamellen 14, 19 deutlich erkennbar ist. Bezugszeichen für gleiche Elemente bleiben in den Figuren gleich. Die Feldlinien 34 verlaufen im gezeigten Ausschnitt senkrecht zur Drehachse 21 und durchsetzen den Permanentmagneten 29, den Rotor 28 und den Stator 22. Die Feldlinien 34 verlaufen waagrecht durch den Zahnkopf 24 des Stators 22 über den Luftspalt 26 zwischen Stator 22 und Rotor 28 zum Außenbereich 30 des Rotors 28, in dem die verschiedenartigen Lamellen 14 und 19 parallel zur Drehachse 21 alternierend aufeinander gestapelt sind. Die feldfokussierenden Bereiche 32 bündeln die Feldlinien 34, während in den feldfreien Bereichen 31 praktisch keine Feldlinien verlaufen. Die feldfreien Bereiche 31 sind als Luftspalte ausgebildet und entstehen durch das im Vergleich zu den Lamellen 14 fehlende Lamellenmaterial der Lamellen 19 im Außenbereich 30 des Rotors 28. Die Höhe der feldfreien Bereiche 31 entspricht der Dicke der Lamellen 19. Zwischen den Bereichen 31, 32 und der durch die axial übereinander liegenden Öffnungen 12 gebildeten Magnetaufnahme mit dem eingeführten Permanentmagneten 29 ist radial ein kleiner Luftspalt 33 ausgebildet, der z.B. durch Fertigungstoleranzen der Öffnungen 12 bzw. der Permanentmagnete 29 entsteht. Der Permanentmagnet 29 wird homogen von den Feldlinien 34 durchsetzt, die dann in den Innenbereich 16 der Lamellen 19 und 14 eintreten.

Fig. 2b zeigt eine perspektivische Ansicht des Rotors 28 mit durch Öffnungen 12 in seinem Rotorkörper 11 gebildeten Magnetaufnahmen. Deutlich ist im Außenbereich 30 des Rotors 28 die bevorzugte alternierende Anordnung der Lamellen 14 und 19 zu erkennen, wobei die Polschuhe 17 der Lamellen 14 die feldfokussierenden Bereiche 32 bilden und die Luftspalte zwischen je zwei durch eine Lamelle 19 beabstandete Lamellen 14 die feldfreien Bereiche 31 entsprechend Fig. 2a.

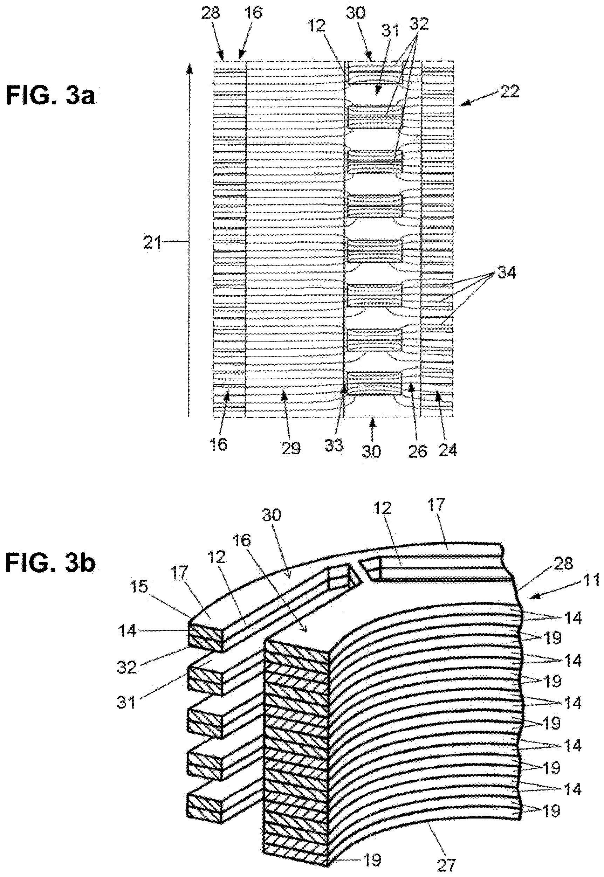

Fig. 3a-b zeigen eine alternative Zusammensetzung der Lamellen 14 und 19, in der zwei Lamellen der ersten Art 14 und zwei Lamellen der zweiten Art 19 alternierend angeordnet sind. Diese Auslegung kann beispielsweise benutzt werden, wenn Lamellen mit einer Dicke von maximal 0,5 mm verwendet werden, z.B. 0,35 mm. Mit diesen dünneren Lamellen können zwei Lamellen 14 zusammen benutzt werden, um einen mechanisch stabilen feldfokussierenden Bereiche 32 zu erzeugen, der eine Dicke von z.B. 0,7 mm statt 0,35 mm hat. Wie in der Ausführungsform nach Figur 2, beträgt der Anteil von Lamellen 19 zur Gesamtzahl der Lamellen (Lamellen 14 + Lamellen 19) 50%. Diese Zusammensetzung ergibt einen feldfreien Bereich 31 mit einer Höhe von z.B. 0,7 mm, der noch einen ausreichenden Magnetkreis erzeugt. Allgemein gilt, dass die Höhe (alternativ auch als axiale Ausdehnung bezeichnet) der feldfreien Bereiche 31 so klein wie möglich sein sollte und vorzugsweise nicht größer als 1,3 mm, insbesondere nicht größer als 1 mm, sein sollte. Die Reduktion der Rotormasse und der Rotorträgheit und die Erhöhung des Luftspaltflusses pro Pol sind in dieser Ausführungsform weitgehend identisch mit der Auslegung nach Fig. 2a-b sein. Die mechanische Zeitkonstante und die Dynamik-Eigenschaften der Elektromaschine 10 werden ebenfalls weitgehend identisch zur Auslegung nach Fig. 2a-b sein.

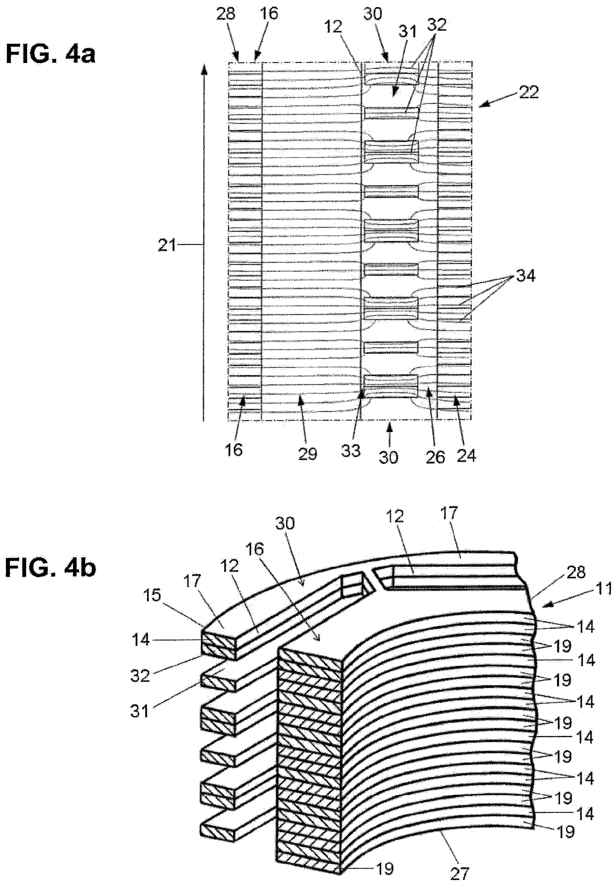

Fig. 4a-b zeigen eine zweite mögliche alternative Zusammensetzung des Rotorkörpers 11 aus Lamellen 14 und 19, wobei die axiale Ausdehnung der feldfokussierenden Bereiche 32 unterschiedlich ist. Diese Auslegung ist ähnlich der Auslegung nach Fig. 3a-b mit der Ausnahme, dass die feldfokussierenden Bereiche 32 abwechselnd durch eine oder zwei Lamellen 14 gebildet ist. Fig. 4a zeigt die Feldlinien 34 in einem Ausschnitt der Elektromaschine 10, die diese Zusammensetzung hat. Aus Fig. 4a ist ersichtlich, dass diese Auslegung in der Lage ist, alle Feldlinien 34 des Permanentmagneten 29 zu bündeln. Der Anteil von Lamellen der zweiten Art 19 zur Gesamtzahl der Lamellen (Lamellen 14 + Lamellen 19) beträgt dabei 57%. Dieser höhere Anteil führt zu einer weiteren Reduktion der Rotormasse, der Rotorträgheit und der mechanischen Zeitkonstante, die zu einer weiteren Verbesserung der Dynamik-Eigenschaften der Elektromaschine führen.

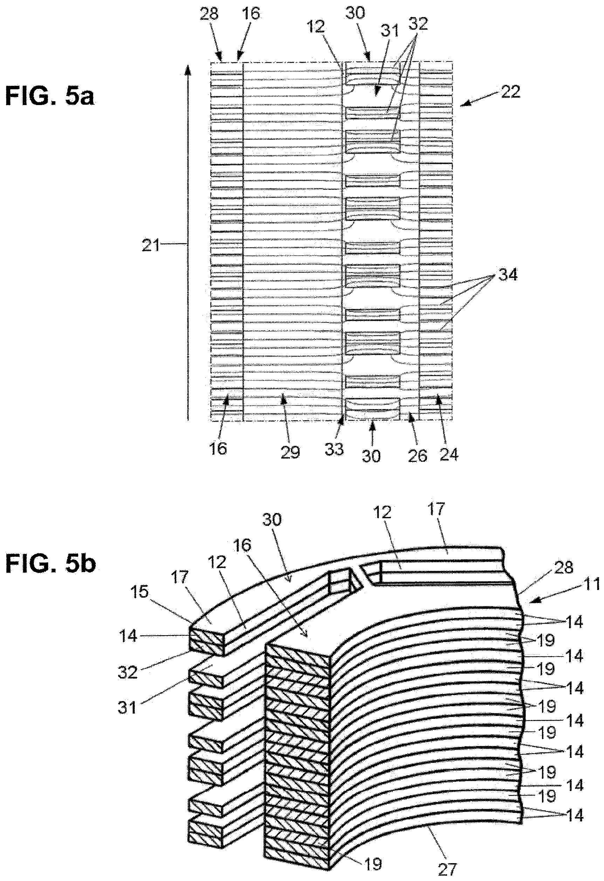

Fig. 5a-b zeigen eine dritte mögliche alternative Zusammensetzung der Lamellen 14 und 19, wobei die Höhe bzw. axiale Ausdehnung der feldfreien Bereiche 31 unterschiedlich ist. Diese Auslegung ist ähnlich der der Fig. 4a-b mit der Ausnahme, dass die feldfreien Bereiche 31 abwechselnd durch eine oder zwei Lamelle 19 gebildet ist. Fig. 5a zeigt die Feldlinien 34 in einem Ausschnitt der Elektromaschine 10, die diese Zusammensetzung hat. Aus dieser Figur geht hervor, dass diese Auslegung in der Lage ist, alle Feldlinien 34 vom Permanentmagnet 29 zu bündeln. Der Anteil von Lamellen 19 zur Gesamtzahl der Lamellen (Lamellen 14 + Lamellen 19) beträgt 50% und ist identisch mit der bevorzugten Auslegung in Fig. 2a-b. Die Reduktion der Rotormasse und der Rotorträgheit und die Erhöhung des Luftspaltflusses pro Pol werden weitgehend identisch zur Auslegung in Fig. 2a-b sein. Die mechanische Zeitkonstante und die Dynamik-Eigenschaften der Elektromaschine 10 werden ebenfalls weitgehend identisch zur Auslegung in Fig. 2a-b sein.

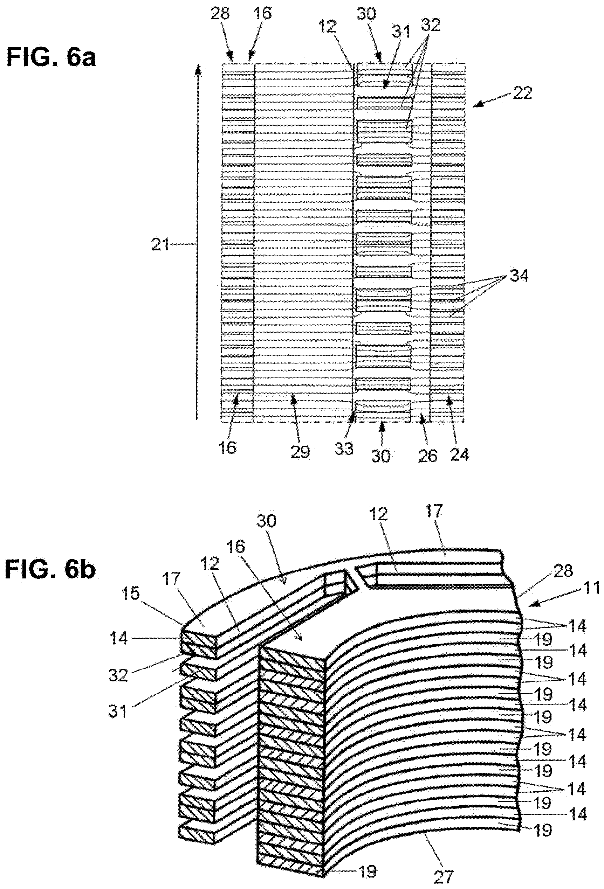

Fig. 6a-b zeigen eine vierte mögliche alternative Zusammensetzung der Lamellen 14 und 19. Diese Auslegung hat eine Zusammensetzung, in der insgesamt die feldfreien Bereiche 31 40% und die feldfokussierende Bereiche 32 60% der Gesamtzahl der Lamellen (Lamellen 14 + Lamellen 19) ausmachen. Dies bedeutet, dass gemäß dieser Ausführungsform mehr Lamellen der ersten Art 14 als Lamellen der zweiten Art 19 vorgesehen sind als in den zuvor beschriebenen Ausführungsformen: Die feldfreien Bereiche 31 werden durch jeweils eine Lamelle 19 gebildet, während die feldfokussierenden Bereiche 32 abwechselnd aus einer oder zwei Lamellen 14 aufgebaut sind. Diese Auslegung könnte z.B. vorteilhaft sein, wenn der Stator 22 der Elektromaschine 10 ein sehr großes Ankerquerfeld und einen kleinen Luftspalt 26 aufweist. Unter diesen Bedingungen würden die feldfokussierenden Bereiche 32 nach Fig. 2 bis 5 eine Sättigung erreichen. Eine hohe Sättigung der feldfokussierenden Bereiche 32 sollte vermieden werden, weil dies zu einer Reduktion des Unterschieds zwischen der q-Achsen- und der d-Achsen-Reaktanz führt, und dies wiederum zu einer Reduktion des Reluktanzmoments das die Elektromaschine 10 erzeugen kann, führt. Diese Tatsache resultiert in einer Reduktion des gesamten Drehmomentes der Elektromaschine 10 und sollte deshalb vermieden werden. Die Auslegung nach Fig. 6 ist mit einer kleineren Verringerung der Rotormasse und der Rotorträgheit im Vergleich zu den Auslegungen nach Fig. 2 bis 5 verbunden.

Weitere Ausgestaltungen des Rotorkörpers mit Lamellen der ersten und der zweiten Art sind denkbar, um Eigenschaften zu erreichen, die ähnlich sind zur bevorzugten Auslegung in Fig. 2a-b. Die axiale Ausdehnung eines feldfreien Bereiches 31 sollte vorzugsweise maximal 1,3 mm, besonders bevorzugt maximal 1 mm, sein, wobei ein feldfreier Bereich 31 bevorzugt jeweils durch eine oder mehrere Lamellen der zweiten Art gebildet sein kann (z.B. eine 0,5 mm oder eine 0,65 mm dicke Lamelle 19 oder zwei 0,35 mm dicke Lamellen 19). Die feldfokussierenden Bereiche 32 können aus einer oder mehreren Lamellen der ersten Art 14 bestehen. Die Anzahl von verwendeten Lamellen 14 werden die Rotormasse, die Rotorträgheit und den Luftspaltfluss pro Pol der Elektromaschine 10 beeinflussen und kann so gewählt werden, dass die Elektromaschine 10 die gewünschten Dynamik-Eigenschaften aufweist. Insbesondere wird die Anzahl der Lamellen mit feldfreien Bereichen (Lamellen der zweiten Art) so gewählt, dass ihr Anteil an der Gesamtanzahl der Lamellen (d.h. Lamellen mit feldfreien Bereichen und Lamellen mit feldfokussierenden Bereichen) 30 bis 70 % beträgt.

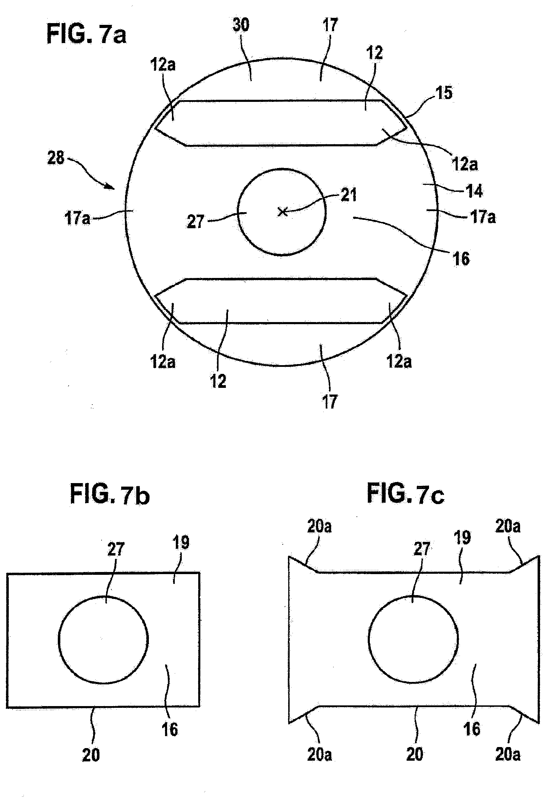

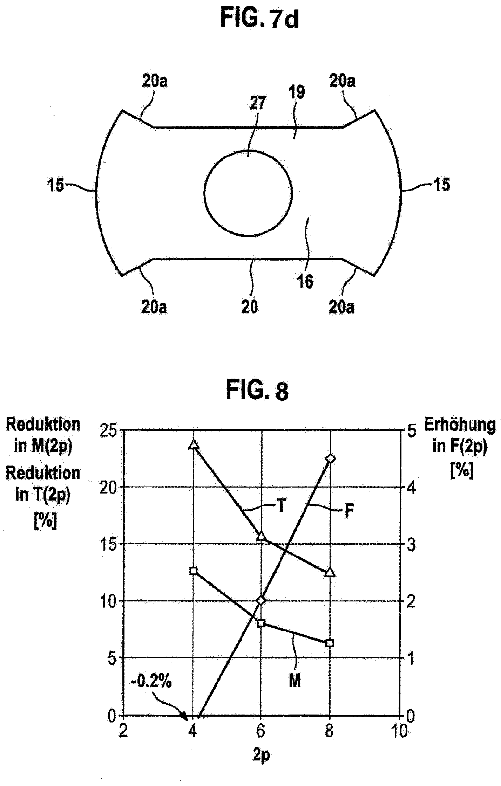

Die Fig. 7a-d zeigen eine Draufsicht auf eine erste Art Lamelle 14 für eine nicht dargestellte Folgepol-Elektromaschine mit drei Phasen und vier Polen, sowie alternative Ausgestaltungen von Lamellen 19 der zweiten Art (Fig. 7b, 7c, 7d).

Die Elektromaschine weist in ihrem Stator sechs Nuten für Spulenwicklungen sowie sechs Statorzähne auf. Der bevorzugte Rotor 28 weist Lamellen 14 auf, die im Außenbereich 30 zwei umfänglich gegenüberliegende längliche Öffnungen 12 aufweisen, die im Stapel der Lamellen 14, 19 Magnetaufnahmen für Permanentmagnete bilden. An ihren beiden, dem Außenumfang 15 zugewandten schmalen Enden 12a sind die Öffnungen 12 zugespitzt. Am Außenumfang sind entlang der Öffnungen 12 Polschuhe 17 und zwischen den Öffnungen 12 Polschuhe 17a ausgebildet.

Weiterhin weist der Rotor 28 Lamellen 19 auf, die gleich dem Innenbereich 16 des Rotors 28 ausgebildet sind. In einer ersten bevorzugten Ausgestaltung sind diese Lamellen 19 rechteckig ausgebildet (Fig. 7b). Alternativ können diese Lamellen 19 an zwei Enden mit Erweiterungen 20a ausgebildet sein (Fig. 7c), so dass der Querschnitt der Lamellen 19 größer ist als im Ausführungsbeispiel in Fig. 7b und dem Verlauf des Innenbereichs 16 zwischen den beiden Öffnungen 12 mit den Enden 12a noch enger angepasst und komplementär zum Verlauf der Öffnungen 12 mit den Enden 12a ausgebildet ist. Ebenso kann der Querschnitt der Lamellen 19 im Bereich der Polschuhe 17a gerundet und an die Kontur der Lamellen 14 angepasst sein (Fig. 7d). Bei diesen Alternativen ist günstigerweise ein Teil der weichmagnetischen Polschuhe 17a in den Querschnitt eingeschlossen, um Luftspaltflussverluste durch Sättigung zu vermeiden, wenn eine Flussdichte von mehr als 0,9 Tesla in konventioneller Auslegung (Lamellenpaket nur mit Lamellen 14) in diesem Bereich existiert.

Durch die bevorzgute alternierende Anordnung der Lamellen 14 und 19 entfallen 50% der Polschuhe 17, 17a im Rotor 28, wie z.B. Fig. 2b zeigt. Damit entfällt auch der - in der konventionellen Ausgestaltung der Lamellen - verlorene kurzgeschlossene magnetische Streufluss zu etwa 50%. Die Verminderung des Streuflusses erhöht damit den magnetischen Fluss im Luftspalt 26 (Fig. 1a, Fig. 2a), wodurch sich das Moment durch magnetische Ausrichtung der Elektromaschine 10 erhöht. Weiterhin ist auch, durch die kleinere Fläche der Lamellen 19, die Masse und das Trägheitsmoment des Rotors 28 bzw. der Elektromaschine 10 reduziert. Durch die Verminderung des Rotorträgheitsmoments und dem Anstieg des Luftspaltflusses wird auch die mechanische Zeitkonstante (z.B. Zeitkonstante beim Start) der Elektromaschine signifikant erniedrigt. Die mechanische Zeitkonstante ist bekanntermaßen proportional zum Trägheitsmoment des Rotors 28 und umgekehrt proportional zum Luftspaltfluss pro Pol der Elektromaschine 10. Entsprechend werden auch die dynamischen Eigenschaften der Elektromaschine 10 verbessert.

Durch dreidimensionale Finite-Element-Analysen kann die Elektromaschine 10 modelliert werden, was am Beispiel einer als achtpoliger Innenläufer ausgebildeten Synchronmaschine mit drei Phasen, zwölf Statorzähnen und acht Magnetaufnahmen für NdFeB-Permanentmagnete im Rotor 28 durchgeführt wurde.

Verglichen mit einer konventionellen Maschine, deren Rotor mit einem Blechpaket aus gleichartigen Lamellen 14 ausgebildet ist, zeigt eine bevorzugte Elektromaschine 10 mit einer alternativen Anordnung von Lamellen 14 und Lamellen 19 verbesserte Daten.

Weist die konventionelle Maschine einen Rotorstreufluss von 100%, einen Luftspaltfluss pro Pol von 100%, eine Rotormasse von 100% und ein Rotorträgheitsmoment von 100% auf, liegen die Werte für die bevorzugte Elektromaschine 10 bei einem Rotorstreufluss von 54%, einem Luftspaltfluss pro Pol von 104,5%, einer Rotormasse von 93,8% und einem Rotorträgheitsmoment von 87,7%.

Werden vergleichbare Elektromaschinen 10 mit vier, sechs oder acht Polen betrachtet, ergibt sich eine Abhängigkeit der maximalen Höhe in der Mitte der gewölbten Polschuhe 17 (Fig. 1b) umgekehrt proportional zur Anzahl der Pole, die z.B. von etwa 5 mm bei vier Polen über etwa 2,5 mm bei sechs Polen auf knapp 2 mm bei acht Polen fällt. Bei Rotoren 28 für vierpolige oder sechspolige Elektromaschinen 10 werden die Rotormasse M, das Rotorträgheitsmoment T und die mechanische Zeitkonstante noch deutlicher reduziert als beim Beispiel der achtpoligen Elektromaschine 10. Dies ist in Fig. 8 anhand des Verlaufs der Rotormasse M(2p), des Rotorträgheitsmoments T(2p) und des Luftspaltflusses pro Pol F(2p) in Abhängigkeit von der Polzahl 2p dargestellt.

Die vierpolige Elektromaschine mit der bevorzugten alternierenden Lamellenanordnung zeigt eine Reduktion der Rotormasse M von mehr als 12% und eine Reduktion des Rotorträgheitsmoments T von mehr als 23%. Der Luftspaltfluss F ist mit etwa 0,2% kleiner als mit einem konventionellen Lamellenpaket als Rotor und deutet an, dass zweckmäßigerweise eine vierpolige Ausgestaltung der Elektromaschine 10 die kleinste Polzahl für eine zweckmäßige Anwendung der Erfindung darstellt.

## Patentansprüche

1. Rotor (28) für eine Elektromaschine, wobei der Rotor (28) um eine Drehachse (21) drehbar gelagert ist und wobei der Rotor (28) einen Rotorkörper (11) und Permanentmagnete (29) umfasst, wobei der Rotorkörper (11) parallel zur Drehachse (21) abwechselnd feldfokussierende und nahezu feldfreie Bereiche (32, 31) ausbildet, wobei die nahezu feldfreien Bereiche durch Luftspalte gebildet sind und wobei der Rotorkörper (11) durch wenigstens zwei Arten von Lamellenblechen (14, 19) gebildet ist, die in Richtung der Drehachse (21) aufeinander gestapelt sind, und die zweite Art von Lamellenblechen (19) mit ihren Abmessungen radial innerhalb der ersten Art von Lamellenblechen (14) liegen, wobei die Lamellenbleche der zweiten Art (19) mit ihrem jeweiligen Außenumfang (20) bei eingesetzten Permanentmagneten (29) an die Permanentmagnete (29) angrenzen, wobei die Permanentmagnete radial magnetisiert sind und sich in tangentialer Richtung erstrecken, wobei die die feldfreien Bereiche (31) bildenden Luftspalte in axialer Richtung zwischen zwei Lamellenblechen erster Art (14) ausgebildet sind, wobei die feldfokussierenden Bereiche (32) radial zwischen den Permanentmagneten (29) und dem statorseitigen Rotorumfang (15) angeordnet sind und wobei in dem Rotor (28) innerhalb des Rotorkörpers (11) Öffnungen (12) zur Aufnahme von den sich in axialer Richtung parallel zur Drehachse (21) erstreckenden Permanentmagneten vorgesehen sind und der Rotor als Innenläufer ausgebildet ist

2. Rotor (28) nach Anspruch 1, **dadurch gekennzeichnet, dass** die feldfokussierenden Bereiche (32) durch Lamellenblechmaterial gebildet sind.

3. Rotor (28) nach einem der vorhergehenden Ansprüche, **dadurch gekennzeichnet, dass** die Öffnungen (12) einen trapezförmigen Querschnitt aufweisen.

4. Elektromaschine mit einem Rotor (28) nach einem der vorhergehenden Ansprüche.

5. Elektromaschine nach Anspruch 4, **dadurch gekennzeichnet, dass** die Elektromaschine als bürstenlose Synchronmaschine oder bürstenlose Gleichstrommaschine ausgebildet ist.

## Claims

1. Rotor (28) for an electrical machine, wherein the rotor (28) is mounted such that it can rotate about an axis of rotation (21), and wherein the rotor (28) comprises a rotor body (11) and permanent magnets (29), wherein the rotor body (11) forms alternately field-focusing and virtually field-free regions (32, 31) parallel to the axis of rotation (21), wherein the virtually field-free regions are formed by air gaps, and wherein the rotor body (11) is formed by at least two types of laminations (14, 19), which are stacked on one another in the direction of the axis of rotation (21), and the second type of laminations (19) are located with their dimensions radially within the first type of laminations (14), wherein the laminations of the second type (19) adjoin the permanent magnets (29) with their respective outer circumference (20) when the permanent magnets (29) are inserted, wherein the permanent magnets are magnetized radially and extend in the tangential direction, wherein the air gaps forming the field-free regions (31) are formed in the axial direction between two laminations of first type (14), wherein the field-focusing regions (32) are arranged radially between the permanent magnets (29) and the stator-side rotor circumference (15), and wherein openings (12) for receiving the permanent magnets extending in the axial direction parallel to the axis of rotation (21) are provided in the rotor (28), within the rotor body (11), and the rotor is formed as an internal rotor.

2. Rotor (28) according to Claim 1, **characterized in that** the field-focusing regions (32) are formed by lamination material.

3. Rotor (28) according to one of the preceding claims, **characterized in that** the openings (12) have a trapezoidal cross section.

4. Electrical machine having a rotor (28) according to one of the preceding claims.

5. Electrical machine according to Claim 4, **characterized in that** the electrical machine is formed as a brushless synchronous machine or brushless DC machine.

## Revendications

1. Rotor (28) pour une machine électrique, le rotor (28) étant supporté de manière à pouvoir tourner autour d'un axe de rotation (21) et le rotor (28) comprenant un corps de rotor (11) et des aimants permanents (29), le corps de rotor (11) constituant une alternance de régions (32, 31) focalisant le champ et pratiquement sans champ parallèlement à l'axe de rotation (21), les régions pratiquement sans champ étant formées par des entrefers et le corps de rotor (11) étant formé par au moins deux types de tôles lamellaires (14, 19) qui sont empilées les unes sur les autres dans la direction de l'axe de rotation (21) et le deuxième type de tôles lamellaires (19) étant situé avec ses dimensions radialement à l'intérieur du premier type de tôles lamellaires (14), les tôles lamellaires du deuxième type (19) étant adjacentes aux aimants permanents (29) par leur périphérie extérieure respective (20) lorsque les aimants permanents (29) sont insérés, les aimants permanents étant magnétisés radialement et s'étendant dans la direction tangentielle, les entrefers formant les régions sans champ (31) étant réalisés dans la direction axiale entre deux tôles lamellaires du premier type (14), les régions focalisant le champ (32) étant disposées radialement entre les aimants permanents (29) et la périphérie du rotor du côté du stator (15) et des ouvertures (12) étant prévues dans le rotor (28) à l'intérieur du corps de rotor (11) pour recevoir les aimants permanents s'étendant dans la direction axiale parallèlement à l'axe de rotation (21) et le rotor étant réalisé sous forme de d'induit intérieur.

2. Rotor (28) selon la revendication 1, **caractérisé en ce que** les régions focalisant le champ (32) sont formées par un matériau en tôle lamellaire.

3. Rotor (28) selon l'une quelconque des revendications précédentes, **caractérisé en ce que** les ouvertures (12) présentent une section - transversale en forme de trapèze.

4. Machine électrique comprenant un rotor (28) selon l'une quelconque des revendications précédentes.

5. Machine électrique selon la revendication 4, **caractérisée en ce que** la machine électrique est réalisée sous forme de machine synchrone sans balais ou de machine à courant continu sans balais.
